(19) Europäisches Patentamt
European Patent Office
Office européen des brevets

(11) **EP 2 420 977 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
***G06T 11/00*** *(2006.01)*  ***B21D 28/16*** *(2006.01)*

(21) Anmeldenummer: **10008559.6**

(22) Anmeldetag: **17.08.2010**

(54) **Verfahren zur Voraussage bzw. Ermittlung des Einzugs an einem Stanzteil**

Method for predicting and determining the feed of a stamping part

Procédé de prévision ou de détermination de l'introduction dans une pièce découpée

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.02.2012 Patentblatt 2012/08**

(73) Patentinhaber: **Feintool Intellectual Property AG 3250 Lyss (CH)**

(72) Erfinder:
• **Delis, Andreas, Dipl.-Masch.-Ing. 8032 Zürich (CH)**

• **Schneeberger, Marc, Dipl.-Masch.-Ing. 3263 Kallnach (CH)**
• **Fürer, Gilbert 3282 Bargen (DE)**

(74) Vertreter: **Hannig, Wolf-Dieter Cohausz Hannig Borkowski Wißgott Patentanwaltskanzlei GbR Friedlander Straße 37 12489 Berlin (DE)**

(56) Entgegenhaltungen:
EP-A1- 1 452 985  EP-A1- 2 036 631
DE-A1-102007 005 847  DE-A1-102008 019 341
US-B1- 6 353 768  US-B1- 6 765 651

**Beschreibung**

Die Erfindung betrifft ein Verfahren zur Voraussage des Einzugs an einem durch ein virtuelles Feinstanzen erzeugten Teil, bei dem ein digitales Bild der Schnittkontur des Teils erzeugt, als Bild-Datei bereitgestellt und in einer Bildverarbeitungseinrichtung einer Bildanalyse unterzogen wird.

Stand der Technik

Typische Merkmale von Feinschneidteilen sind Kanteneinzug und Schnittgrad. Insbesondere in Eckenpartien stellt sich Einzug ein, der mit kleiner werdendem Eckenradius und steigender Blechdicke zunimmt. Die Einzugstiefe kann rd. 20% und die Einzugsbreite von 30% der Blechdicke oder mehr betragen (siehe DIN 3345, Feinschneiden, Aug. 1980). Dieser Einzug ist damit abhängig von Materialdicke und -qualität, so dass seine Steuerung nur begrenzt möglich ist und oft eine Einschränkung der Teilefunktion, beispielsweise durch die hervorgerufene Änderung der Funktionslänge der Teile, mit sich bringt.
Der Stanzeinzug reduziert deshalb die Teilefunktion und zwingt den Hersteller zur Verwendung eines dickeren Ausgangsmaterials.
Aussagen zum Einzug an durch Stanzen oder Feinschneiden erzeugten Teilegeometrien basieren nach dem Stand der Technik auf einer Kombination von Erfahrungen und empirischen Daten aus Schneid- und Umformvorgängen. Dem Stand der Technik fehlt es an einem System zur zuverlässigen Voraussage des Einzuges. Da die Höhe des Stanzeinzugs vor der Herstellung realer Teile bisher nur sehr vage voraussagbar ist, wird stets eine Lösung mit einer verhältnismäßig großen Ausgangsblechdicke gewählt. Dies führt insbesondere zu einem hohen Materialverbrauch und erfordert außerdem größere Umformkräfte, wodurch wiederum der Werkzeugverschleiß steigt. Bekannte Lösungen zur Simulation von Schneid- und Umformvorgängen bedienen sich grundsätzlich der Finite-Elemente-Methode (siehe DE 10 2006 047 806 A1, DE 10 2007 039 337 B3, EP 923 755 B1, US 6, 353, 768B1, US 6 785 640 B1). Der Nachteil dieser bekannten Lösungen liegt darin, dass sie zeit- und rechenaufwändig, kostspielig und schwer anwendbar sind.
Ferner ist aus der EP 2 036 631 A1 ein Verfahren bekannt, mit dem der Kanteneinzug durch Erzeugen eines dem Volumen entsprechenden Einzugs innerhalb der Teilegeometrie gezielt vermieden wird. Dies geschieht dadurch, dass vor Beginn des Schnitts am eingespannten unbehandelten Bandstreifen entgegen der Schneidrichtung mit einem Vorformelement ein negatives Vorformen durchgeführt wird, das dem erwarteten Kanteneinzug beim Schneiden in die Schneidplatte in Größe und Geometrie zuzüglich einer Zugabe entspricht und ein Materialvolumen in gespiegelter Form an der Einzugsseite erzeugt, und dass mit Beginn und während des Schnitts der vorgeformte Bereich des eingespannten Bandstreifens durch das Vorformelement abgestützt wird.
Außerdem ist nach der DE 10 2008 019 341 A1 ein verfahren zur Analyse von Masken für die Photolithographie bekannt, bei dem eine Faltung der Eingangsdaten mit einer Gauß-Funktion erfolgt.

Aufgabenstellung

Bei diesem Stand der Technik liegt der Erfindung die Aufgabe zugrunde, ein Verfahren zur Voraussage bzw. Ermittlung des Einzugs an einem virtuellen Teil bereitzustellen, durch das der Einzug vor der Herstellung der Teile unter Verzicht aufwändiger virtueller und realer Versuche bei gleichzeitiger Vermeidung aufwändiger Rechenleistung, Einsparung von Material und Reduzierung des Werkzeugverschleißes mittels einer an die Erfordernisse der Schneid- und Umformvorgänge besser angepassten Auslegung der Werkzeuge sicher voraussagbar ist.
Diese Aufgabe wird durch ein Verfahren der eingangs genannten Gattung mit den Merkmalen des Anspruchs 1 gelöst.
Vorteilhafte Ausgestaltungen des Verfahrens sind den Unteransprüchen entnehmbar.
Die erfindungsgemäße Lösung geht von der Erkenntnis aus, durch einen Bildbearbeitungsvorgang in Form einer Weichzeichnung der Kontur einer Schneidgeometrie unter Berücksichtigung der mechanischen Eigenschaften des geschnittenen Werkstoffes die nach dem Schneiden resultierende Blechdicke in sämtlichen Bereichen zu bestimmen, ohne dass reale Teile hergestellt oder aufwändige Finite-Elemente-Simulationen durchgeführt werden müssen.
Dies wird durch folgende Schritte erreicht:

a) Einfärben der innerhalb von der Schnittkontur umgrenzten Fläche liegenden Punkte und der außerhalb der Schnittkontur liegenden Punkte mit verschiedenen, voneinander unterscheidbaren Farben,
b) Durchführen mindestens eines einmaligen Weichzeichnungsvorganges an der Schnittkontur des Teils mit einem auf den Werkstoff des Teils und sein Umformvermögen kalibrierten Filter zum Erzeugen von unterschiedlichen Farbstufenwerten,
c) Erneutes Einfärben der außerhalb der Schnittkontur liegenden eingefärbten Punkte mit der ursprünglichen Farbe vor dem Einfärben,

d) Verarbeiten der Farbstufenwerte zu einem Maß für die Restdicke an der Schnittkontur des Teils nach dem Feinstanzen im Vergleich zur Ausgangsdicke des Teils vor dem Feinstanzen,

e) Ermitteln des Einzugs aus den einzelnen Farbstufen an der Schnittkontor durch Zuordnen einer Restdicke im Bereich der Schnittkontur.

Von besonderem Vorteil ist, dass der Einzug am realen Teil mit einer hohen Genauigkeit vorhergesagt werden kann.

Damit wird es möglich, innerhalb sehr kurzer Zeit Informationen über den Einzug zu gewinnen, wodurch sich die Sicherheit bei der Auslegung einer Teilegeometrie bzw. eines Feinschneidvorganges signifikant erhöht. Des Weiteren können die so gewonnenen Informationen als Input für die Simulation von Nachfolgeprozessen verwendet werden, was die Genauigkeit der Simulation verbessert.

In einer bevorzugten Ausführungsvariante werden für das erfindungsgemäße Verfahren ein Gauß-Filter und/ oder ein Laplace-Filter eingesetzt, der die Schnittkontur über einen graduellen Übergang durch unterschiedliche Graustufen weichzeichnet, die der relativen Blechdicke im Vergleich zur ursprünglichen Blechdicke entsprechen. Weiter kann der Filter durch ein Polynom der Form

$$f(x) = \sum_{i=0}^{n} c_i \; x^{2i}$$

definiert werden.

In weiterer Ausgestaltung des erfindungsgemäßen Verfahrens ist das Weichzeichnen als iterativer Vorgang, d.h. mehrfaches, vorzugsweise 2 bis 15 maliges Filtern des Bildes, ausgelegt. Werkstoffe mit einem geringen Umformvermögen, d.h. Materialeigenschaften wie Zugfestigkeit, Streckgrenze und Bruchdehnung, erfordern eine deutlich geringere Anzahl von Filtervorgängen als Werkstoffe mit einem höheren Umformvermögen.

Für die Ausführung des erfindungsgemäßen Verfahrens an Werkstoffen mit einem hohen Umformvermögen sind besonders Gauß-Filter mit einem großen Einflussradius geeignet, während Werkstoffe mit geringem Umformvermögen Gauß-Filter erfordern, die einen kleinen Einflussradius besitzen.

Je nach der Höhe des Umformvermögens des Werkstoffes wird der Anteil der Farben, vorzugsweise schwarz und weiss, in den Farbstufen so gewichtet, dass bei geringem Umformvermögen die eine Farbe, beispielsweise schwarz, eine stärkere Gewichtung und bei hohem Umformvermögen die andere Farbe, beispielsweise weiss, eine stärkere Gewichtung erfährt.

Mit dem erfindungsgemäßen Verfahren kann der Einzug an einem Stanz- oder Feinschneidteil an sämtlichen Bereichen der Schneidkontur vorhergesagt bzw. ermittelt werden, ohne dass reale Teile hergestellt, Versuche durchgeführt oder aufwändige Finite-Elemente -Simulationen durchgeführt werden müssen. Dies führt zu einer höheren Sicherheit in der Auslegung von Teilegeometrien und letzten Endes zur Dickenreduzierung des Ausgangswerkstoffes.

Weitere Vorteile und Einzelheiten ergeben sich aus der nachfolgenden Beschreibung unter Bezugnahme auf die beigefügten Zeichnungen.

Ausführungsbeispiel

Die Erfindung soll nachstehend an einem Ausführungsbeispiel näher erläutert werden.

Es zeigen

Fig. 1 einen Schnitt im Bereich der Schnittkante eines Feinschneidteils mit Darstellung des Einzugs,

Fig. 2 eine Aufsicht einer Teilekontur eines Zahnrades, dessen Innenkontur mit Schwarz aufgefüllt wurde,

Fig. 3 eine Aufsicht einer mit einem Gauß-Filter weichgezeichneten Schnittkontur eines Zahnrads,

Fig. 4 eine Aufsicht einer weichgezeichneten Teilekontur eines Zahnrades, deren Graustufenwerten jeweils eine Blechdicke zugeordnet wurde,

Fig. 5 eine Draufsicht einer Teilekontur eines Zahnrades aus einem Werkstoff mit geringem Umformvermögen und

Fig. 6 eine Teilekontur eines Zahnrades aus einem Werkstoff mit hohem Umformvermögen.

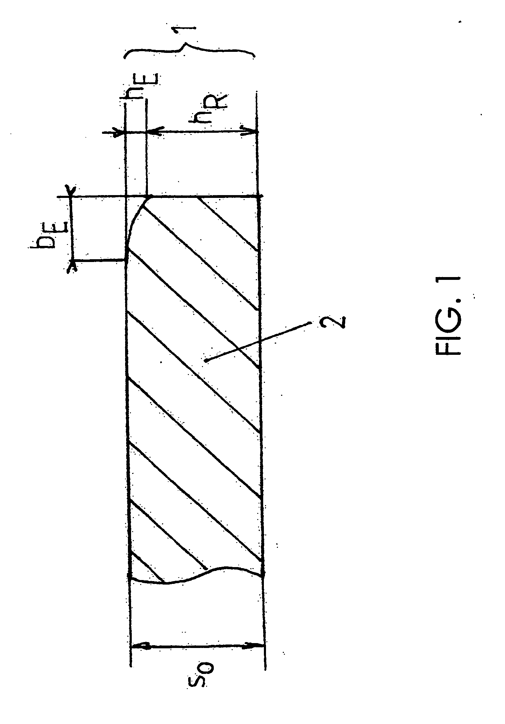

Die Fig. 1 zeigt schematisch eine durch Feinschneiden erzeugte Schnittfläche 1 an einem Teil 2 mit einer Ausgangsblechdicke $S_0$. Nach dem Feinschneiden stellt sich an der Schnittfläche 1 ein Einzug $h_E$ mit einer Einzugsbreite $b_E$ ein. Die Restdicke $h_R$ bestimmt den Traganteil der verbleibenden Funktionsfläche, über die die Kräfte oder Momente, beispielsweise an einem Zahnrad übertragen werden.

Die Restdicke $h_R$ berechnet sich wie folgt:

$$h_R = S_0 - h_E \geq s_{crit,}$$

wobei $S_{crit}$ die minimal geforderte Restdicke bedeutet und die Ausgangsblechdicke $s_0$ die Bedingung

$$S_0 \geq s_{crit} + h_E$$

erfüllen muss.

Einzüge sind immer dort maximal, wo die Länge der Schnittkontur im Verhältnis zur stützenden Fläche hoch ist. Mit anderen Worten erfährt ein Punkt einen umso größeren Einzug, je weniger stützendes Material in seiner Umgebung vorhanden ist. Im Fall einer Feinverzahnung bedeutet dies, dass die Zahnspitze einen sehr großen Einzug aufweist und der Zahnfuss kaum einen Einzug hat.

Es soll mit dem erfindungsgemäßen Verfahren der Einzug $h_E$ für ein aus Stahlblech bestehendes Zahnrad 3 vorausgesagt werden, dessen geometrische Daten wie Ausgangsblechdicke $s_0$, die Anzahl der Zähne und das Umformvermögen des Stahls bekannt sind.

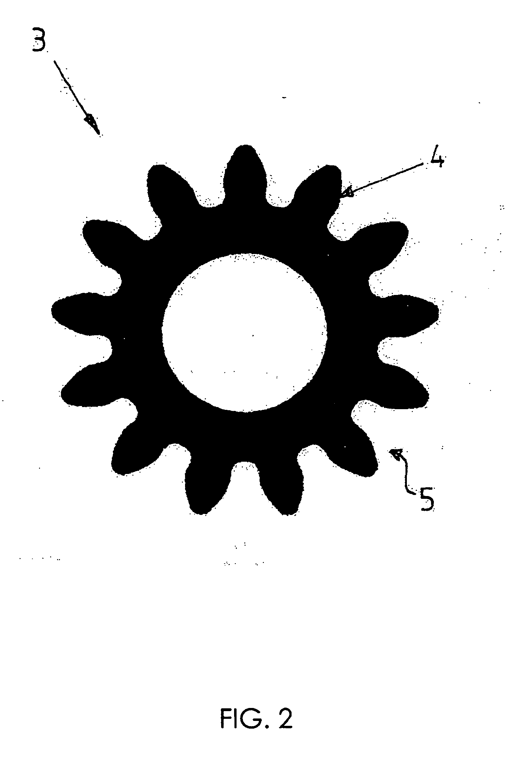

Der Ablauf des erfindungsgemäßen Verfahrens wird an Hand der Fig. 2 bis 4 näher erläutert.

Zunächst wird die Schnittkontur 4 des Zahnrades 3 durch ein entsprechendes Programm, beispielsweise CAD, als ein zweidimensionales digitales Bild 5 erzeugt, wobei Punkte innerhalb der von der Schnittkontur umgrenzten Fläche mit schwarz und Punkte außerhalb dieser Fläche mit weiss eingefärbt werden. Natürlich ist es auch möglich, anstelle der Farben schwarz und weiß andere Farben, beispielsweise blau und rot oder grün und gelb usw. zu verwenden. Das Bild 5 wird dann in einem Speicher einer Bildverarbeitungseinrichtung abgelegt. Dieser Zustand ist in Fig. 2 dargestellt. Es gehört aber auch zur Erfindung, dass das digitale Bild durch optische Mittel wie eine CCD-Kamera oder einen Scanner erzeugt werden können.

Das Bild 5 wird anschließend mit einem optischen Filter, vorzugsweise einem Gauß-Filter, manipuliert, indem die Schnittkontur 4 des Bildes 5 einem Weichzeichnungsvorgang unterworfen wird. Durch den Weichzeichnungsvorgang erhält die Schnittkontur einen graduellen Übergang in unterschiedlichen Graustufenwerten zur geschwärzten Innenfläche der Zahnradgeometrie. Bei Wahl einer anderen Farbkombination entstehen dann die Farbabstufungen entsprechend. Die Operation "Gauß'sches Mitteln gewichtet die Umgebung eines Punktes (Mittelwert 0) gemäß der Gaußverteilung

$$f(x,y) = \frac{1}{2\pi\sigma^2} \cdot e^{-\frac{1}{2}\left(\frac{x^2+y^2}{\sigma^2}\right)}$$

wobei $f(x,y)$ die Gauß-Funktion mit den Koordinaten x, y für ein zweidimensionales Gebiet und $\sigma^2$ die Varianz, d.h. die Steilheit der Glockenkurve. bedeuten.

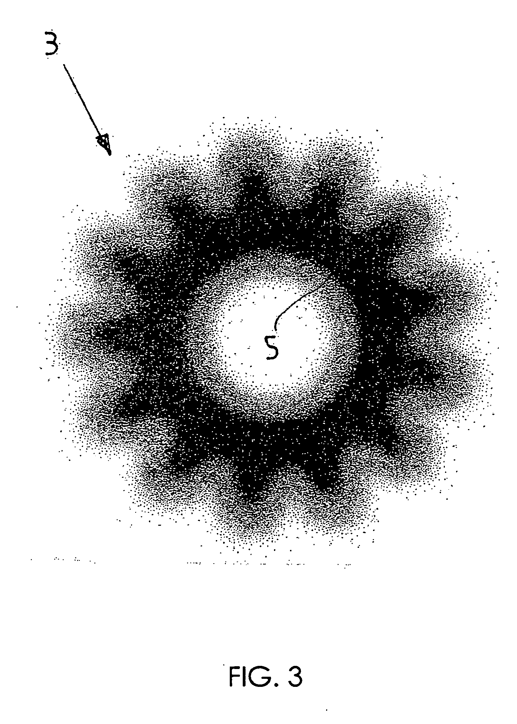

Gauß'sche Weichzeichner berücksichtigen den Wert benachbarter Zellen und ersetzen den Wert der momentan betrachteten Zelle durch einen neuen Wert, der seine Umgebung anhand einer Gauß-Normalverteilung berücksichtigt. Die Fig. 3 zeigt die mit einem Gauß-Filter weichgezeichnete Schnittkontur des Zahnrades 3.

Damit die erzeugten Graustufenwerte der relativen Blechdicke, d.h. der Restdicke $h_R$, entspricht, muss der Gauß-Filter kalibriert bzw. konditioniert werden.

Die Kalibrierung des Gauß-Filters berücksichtigt die mechanischen Eigenschaften des Materials wie folgt:

| Werkstoff | Geringes Umformvermögen | Hohes Umformvermögen |
|---|---|---|
| Radius des Gauß-Filters | kleiner Radius, | großer Radius |
| Anzahl der Iterationen | Gering | hoch |
| Gewichtung schwarz und weiss | Stärkere Gewichtung von schwarz | Stärkere Gewichtung von weiss |

Im weiteren Verlauf des erfindungsgemäßen Verfahrens werden die Graustufenwerte in der Bildanalyse zu einem Maß für die Restdicke $h_R$ entlang der Schnittkontur des Zahnrades 3 nach dem Feinstanzen im Vergleich zur Ausgangsblechdicke vor dem Feinstanzen verarbeitet.

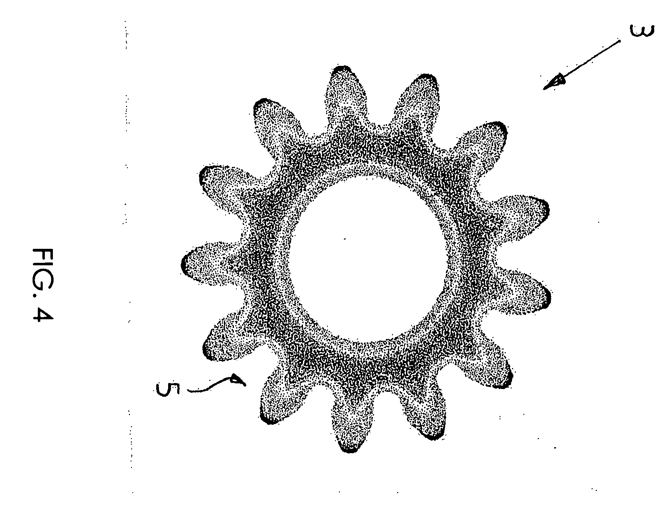

Diesen Zustand zeigt die Fig. 4.

Den einzelnen Graustufenwerten an der Schnittkontur werden die jeweiligen Blechdicken zugeordnet. Dies geschieht dadurch, dass im Speicher der Bildverarbeitungseinrichtung Referenzsignaturen für Graustufenwerte abgespeichert sind. Die Referenzsignaturen sind durch charakteristische Blechdicken gekennzeichnet.

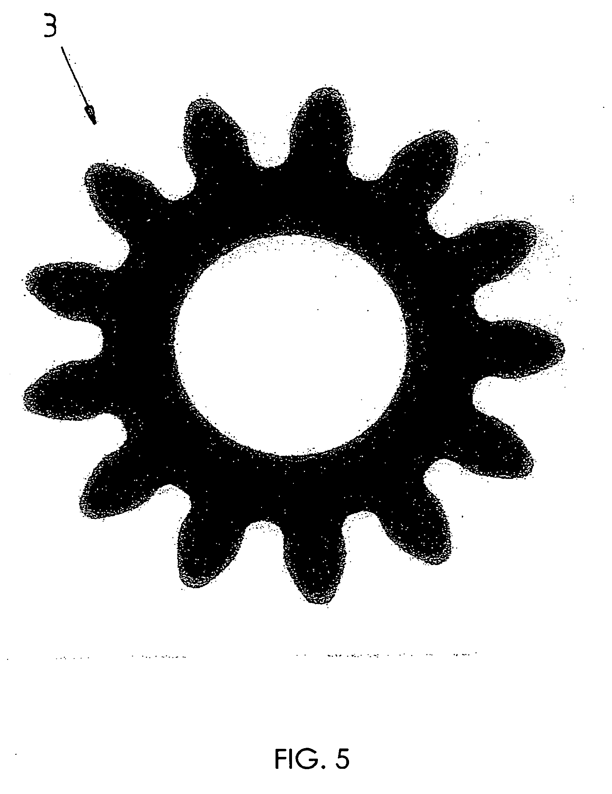

In der Fig. 5 ist ein Bildbeispiel für ein Zahnrad 3 aus einem Werkstoff der Qualität S550MC mit geringem Umformvermögen dargestellt, das durch einen Gauß-Filter mit einem Radius $\sigma$=10 sechsmal manipuliert wurde. Der Gewichtungsfaktor w zwischen Schwarz und Weiss betrug 1. Das Ergebnis sagt grundsätzlich einen geringen Einzug voraus, wobei konkave gegenüber konvexen Krümmungen einen kleineren Einzug aufweisen.

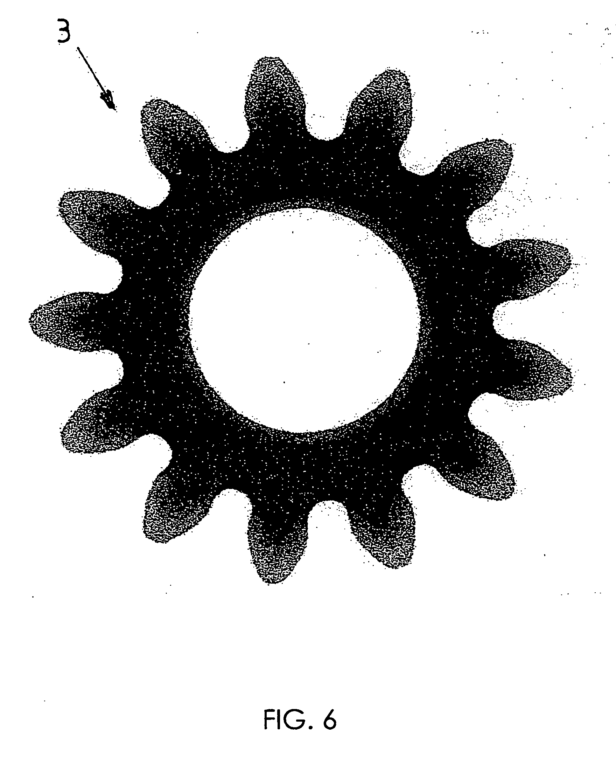

Die Fig. 6 zeigt dagegen ein Bildbeispiel für ein Zahnrad 3 aus einem Werkstoff mit der Qualität DC04 mit hohem Umformvermögen, das durch einen Gauß-Filter mit einem Radius $\sigma$ =20 achtmal manipuliert ist. Der Gewichtungsfaktor w zwischen Schwarz und Weiss beträgt 1. Es ergibt sich grundsätzlich ein größerer Einzug, insbesondere an konkvexen Krümmungen.

Bezugszeichenliste

| Schnittfläche | 1 |
|---|---|
| Teil | 2 |
| Zahnrad | 3 |
| Schnittkontur | 4 |
| Digitales Bild | 5 |
| Gewichtungsfaktor | w |
| Einzugsbreite | $h_B$ |
| Einzug | $h_E$ |
| Restdicke | $h_R$ |
| Minimale zulässige Restdicke | $S_{crit}$ |
| Ausgangsblechdicke | $S_0$ |
| Radius des Gauß-Filters | $\sigma$ |
| Varianz des Gauß-Filters | $\sigma^2$ |
| Ansatzfunktion | f |

**Patentansprüche**

1.  Verfahren zur Voraussage des Einzugs an einem durch ein virtuelles Feinstanzen erzeugten Teil, bei dem ein digitales Bild der Schnittkontur des Teils erzeugt, als Bild-Datei bereitgestellt und in einer Bildverarbeitungseinrichtung einer Bildanalyse unterzogen wird, **gekennzeichnet durch** folgende Schritte:

    a) Einfärben der von der Schnittkontur umgrenzten Fläche des Teils mit Schwarz,
    b) Auflegen des schwarz-eingefärbten Teils auf einen weißen Untergrund,
    c) Erzeugen des digitalen Bildes des eingefärbten Teils durch optische Mittel,
    d) Durchführen mindestens eines einmaligen Weichzeichnungsvorganges an der Schnittkontur des Teils mit einem auf den Werkstoff des Teils und seines Umformvermögen kalibrierten Filter zum Erzeugen von unterschiedlichen Graustufen,

e) Verarbeiten der Graustufenwerte zu einem Maß für die Restdicke an der Schnittkontur des Teils nach dem Feinstanzen im Vergleich zur Ausgangsdicke des Teils vor dem Feinstanzen,

f) Ermitteln des Einzugs aus den einzelnen Graustufen an der Schnittkontor **durch** Zuordnen einer Restdicke im Bereich der Schnittkontur.

2. Verfahren nach Anspruch 1, **dadurch gekennzeichnet, dass** als zum Einfärben der Punkte innerhalb der Schnittkontur schwarz und zum Einfärben der außerhalb der Schnittkontur liegenden Punkte weiß verwendet wird.

3. Verfahren nach Anspruch 1, **dadurch gekennzeichnet, dass** als Farbstufenwerte eine Graustufung verwendet wird.

4. Verfahren nach Anspruch 1, **dadurch gekennzeichnet, dass** der Filter in Abhängigkeit von der Form der Schnittkontur, der Schnittkantengeometrie, der Blechdicke, den Materialeigenschaften wie Zugfestigkeit, Streckgrenze und Bruchdehnung, vom Schnittspalt zwischen den am Schneidvorgang beteiligten Elementen des Werkzeugs wie Schneidplatte und Schneidkolben, von der Wahl der Ansatzfunktion mit den entsprechenden Parametern, der Anzahl der Iterationen und der Gewichtung von schwarz und weiss in den Graustufen kalibriert wird.

5. Verfahren nach Anspruch 4, **dadurch gekennzeichnet, dass** als Schnittkontur vorzugsweise eine konkave und/ oder konvexe Form gewählt wird.

6. Verfahren nach Anspruch 1, **dadurch gekennzeichnet, dass** zum Weichzeichnen der Schnittkontur ein Gauß-Filter und/oder ein Laplace-Filter, bzw. eine entsprechende symmetrische Polynomial-Funktion eingesetzt wird.

7. Verfahren nach Anspruch 1, **dadurch gekennzeichnet, dass** das Weichzeichnen als iterativer Vorgang von vorzugsweise 2 bis 15 maligen Darüberlaufen des Filters über das Bild durchgeführt wird.

8. Verfahren nach Anspruch 1, **dadurch gekennzeichnet, dass** zum Weichzeichnen ein Gauß-Filter mit unterschiedlichen Standardabweichungen (Radien) eingesetzt wird.

9. Verfahren nach Anspruch 1, **dadurch gekennzeichnet, dass** das digitale Bild der Schnittkontur durch ein Programm und/oder ein optisches Mittel wie CCD-Kamera oder Scanner erzeugt wird.

## Claims

1. Method for prediction and determination of the draw-in on a part created through virtual fine blanking, wherein a digital image of the cutting contour of the part is created, prepared as an image file and subjected to an image analysis in an image processing device, **characterized by** the following steps in that

   a) dyeing of the points lying within the area surrounding the cutting contour and the points lying outside the area surrounding the cutting contour in colors that can be distinguished from one another,
   b) conduct at least a one-timing blurring process on the cutting contour of the part with a filter calibrated on the material of the parts and its forming properties, in order to generate different dyeing degree values,
   c) Re-dyeing of the dyed points lying outside the cutting contour with the original color before dyeing,
   d) Processing of dyeing degree values to an extent for the residual thickness at the cutting contour of the part after the fine blanking, of the part after the fine blanking, as compared to the original thickness of the part before the fine blanking,
   e) Determination of the draw-in from the individual degrees of dying at the cutting contour, by assigning a residual thickness in the area of the cutting contour.

2. Method according to claim 1, **characterized in that** for dyeing the points within the cutting contour black is used and for points outside the cutting contour white.at the cutting contour

3. Method according to claim 1, **characterized in that** as clouts values a greying degree is used.

4. Method according to claim 1, **characterized in that** the filter is calibrated in relation to the shape of the cutting contour, the cutting edge geometry, the sheet thickness, the material qualities such as tensile strength, yield strength and breaking elongation, from cutting gap between the elements of the tool in the cutting process, such as cutting plate and cutting piston, to the selection of the initial function with the corresponding parameters, the numbers of iterations and the weightage of black and white in the grey scales.

5. Method according to claim 1, **characterized in that** the preferably a concave and/or convex shape is selected as the cutting contour.

6. Method according to claim 1, **characterized in that** for the blurring of the cutting contour, a Gaussian filter and/or Laplace filter and a corresponding symmetrical polynominal-function is used.

7. Method according to claim 1, **characterized in that** the blurring is conducted as an iterative process having the filter run over the image preferably 2 to 15 times.

8. Method according to claim 1, **characterized in that** for the blurring a Gaussian filter with varying standard deviations (radii) are used.

9. Method according to claim 1, **characterized in that** the digital image of the cutting contour is created through a program and/or optical medium such as a CCD-camera or scanner.

**Revendications**

1. Procédé de prévision de l'amincissement sur une pièce produite par un découpage de précision virtuel, dans lequel une image numérique du contour de coupe est produite, fournie sous forme de fichier d'image et soumise à une analyse d'image dans un dispositif de traitement d'image, **caractérisé par** les étapes suivantes:

   a) coloration en noir de la surface de la pièce délimitée par le contour de coupe,
   b) application de la pièce colorée en noir sur un fond blanc,
   c) production de l'image numérique de la pièce colorée par des moyens optiques,
   d) exécution d'au moins un procédé de floutage unique au niveau du contour de coupe de la pièce à l'aide d'un filtre étalonné sur le matériau de la pièce et son pouvoir de déformation pour produire différentes gradations de gris,
   e) traitement des valeurs de gradations de gris pour obtenir une mesure pour l'épaisseur résiduelle au niveau du contour de coupe de la pièce après le découpage de précision, comparée à l'épaisseur de départ de la pièce avant le découpage de précision,
   f) détermination de l'amincissement à partir des gradations de gris individuelles au niveau du contour de coupe en attribuant une épaisseur résiduelle dans la zone du contour de coupe.

2. Procédé selon la revendication 1, **caractérisé en ce que** l'on utilise le noir pour la coloration des points à l'intérieur du contour de coupe et le blanc pour la coloration des points à l'extérieur du contour de coupe.

3. Procédé selon la revendication 1, **caractérisé en ce que** l'on utilise une échelle de gris en tant que valeurs de gradations de couleurs.

4. Procédé selon la revendication 1, **caractérisé en ce que** le filtre est étalonné en fonction de la forme du contour de coupe, de la géométrie des arêtes de coupe, de l'épaisseur de tôle, des propriétés du matériau, telles que la résistance à la traction, la limite d'élasticité et l'allongement à la rupture, du jeu de coupe entre les éléments de l'outil participant au processus de coupe, tels que la matrice de découpage et le piston de coupe, du choix de la fonction de départ avec les paramètres correspondants, du nombre d'itérations et de la pondération du noir et du blanc dans les gradations de gris.

5. Procédé selon la revendication 4, **caractérisé en ce que** l'on choisit, en tant que contour de coupe, de préférence une forme concave et/ou convexe.

6. Procédé selon la revendication 1, **caractérisé en ce que** l'on utilise, pour le floutage du contour de coupe, un filtre de Gauss et/ou un filtre de Laplace resp. une fonction polynomiale symétrique correspondant.

7. Procédé selon la revendication 1, **caractérisé en ce que** le floutage est exécuté en tant que processus itératif correspondant à un nombre de passages du filtre sur l'image de préférence compris entre 2 et 15.

**8.** Procédé selon la revendication 1, **caractérisé en ce que** l'on utilise, pour le floutage, un filtre de Gauss ayant différents écarts standards (rayons).

**9.** Procédé selon la revendication 1, **caractérisé en ce que** l'image numérique du contour de coupe est produite par un programme et/ou un moyen optique tel qu'une caméra CCD ou un scanner.

FIG. 1

FIG. 2

FIG. 3

FIG. 4

3

FIG. 5

3

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006047806 A1
- DE 102007039337 B3
- EP 923755 B1
- US 6353768 B1
- US 6785640 B1
- EP 2036631 A1
- DE 102008019341 A1

**In der Beschreibung aufgeführte Nicht-Patentliteratur**

- *DIN 3345,* August 1980